Europäisches Patentamt

European Patent Office

Office européen des brevets

(11) Publication number: **0 132 123**
**A2**

## EUROPEAN PATENT APPLICATION

(21) Application number: **84304755.6**

(22) Date of filing: **11.07.84**

(51) Int. Cl.⁴: **G 06 F 15/20**

(30) Priority: **13.07.83 JP 126143/83**
**13.07.83 JP 126144/83**

(43) Date of publication of application:
**23.01.85 Bulletin 85/4**

(84) Designated Contracting States:
**DE FR GB**

(71) Applicant: **Kabushiki Kaisha Toshiba**
**72, Horikawa-cho Saiwai-ku**
**Kawasaki-shi Kanagawa-ken 210(JP)**

(72) Inventor: **Tabata, Mitsuo c/o Patent Division**
**Kabushiki Kaisha Toshiba 1-1 Shibaura 1-chome**
**Minato-ku Tokyo 105(JP)**

(72) Inventor: **Tsunekawa, Shou c/o Patent Division**
**Kabushiki Kaisha Toshiba 1-1 Shibaura 1-chome**
**Minato-ku Tokyo 105(JP)**

(72) Inventor: **Kondo, Takashi c/o Patent Division**
**Kabushiki kaisha Toshiba 1-1 Shibaura 1-chome**
**Minato-ku Tokyo 105(JP)**

(74) Representative: **Freed, Arthur Woolf et al,**
**MARKS & CLERK 57-60 Lincoln's Inn Fields**
**London WC2A 3LS(GB)**

(54) **Memory address control apparatus.**

(57) A memory address control apparatus (3) comprises special hardware in place of a host computer (2) so as to calculate address data for accessing an image memory (1) when the image memory (1) exchanges image data with the host computer (2), thereby decreasing the load of the host computer (2) and improving image processing efficiency.

F I G. 1

- 1 -

## Memory address control apparatus

The present invention relates to a memory address control apparatus for performing, in place of a host computer, the arithmetic operations for accessing any address of an image memory to effectively support high-speed access to an address of the image memory by the host computer.

Computerized digital image processing is currently receiving a great deal of attention in a variety of fields such as medical diagnosis, remote sensing, and in industrial measurement. In a conventional computerized digital image processor, image analysis techniques, such as feature point extraction from the processed image data stored in the image memory and tracking of the feature points, are mainly employed. Such image analysis techniques generally require image data of the object pixel and neighboring pixel data in the image data to be processed. However, as the conventional host computer performs a sequence of a predetermined program, it cannot perform parallel processing of, for example, two-dimensional data arrays or parallel data. The host computer sequentially accesses the addresses at which a plurality of image data required for image analysis is stored. The image data stored at these addresses is sequentially read out to perform image analysis.

The processing program of the host computer which is used in image analysis comprises a sequence of complex processing steps as follows:

(1) a step of calculating the addresses necessary for access to image data of the object pixel in the image data subjected to image processing and stored in the image memory;

(2) a step of storing the address signals calculated in the above step;

(3) a step of accessing the image memory using the address signals stored in step (2);

(4) a step of fetching image data stored in a memory area at the accessed addresses;

(5) a step of analyzing the fetched image data;

(6) a step of resetting the address signals; and

(7) a step of calculating addresses for the next image data.

The image memory for storing the image data to be processed has a two-dimensional address format. For example, when image data of a predetermined region is written in the image memory of a two-dimensional address format by TV scanning, the address calculation to control addressing of the image memory is relatively simple in the host computer. However, when image processing is performed, the host computer must perform a complex address calculation to control addressing of the image memory. Therefore, when address calculation for image analysis is performed by the host computer, the program execution for this purpose becomes time-consuming. In this manner, the host computer cannot calculate the address data at a high speed enough to fetch the necessary image analysis image data from the image memory. As a result, the image memory cannot be accessed at a high speed, and the host computer cannot efficiently perform image processing at a high speed.

It is an object of the present invention to provide a memory address control apparatus capable of performing the necessary address calculations to access an image memory in image analysis by means of special hardware in place of a host computer, so that the execution of a complicated program by the host computer can be omitted, thereby efficiently supporting the host computer so that it can perform high-speed image processing.

In order to achieve the above object of the present invention, there is provided a memory address control apparatus connected to an image memory and a host computer for reading/writing image data with respect to the image memory, said memory address control apparatus being arranged to generate pixel address data supplied to said image memory subjected to image data access, comprising:

input means for receiving from said host computer address data for accessing an object pixel of the image data with respect to said image memory;

initial data producing means for producing initial data required for an address calculation in accordance with address control data supplied from said host computer;

address calculating means for calculating addresses of pixels subjected to access in accordance with the initial data and the address data of the object pixel; and

accessing means for accessing said image memory in accordance with the addresses calculated by said address calculating means.

According to the memory address control apparatus having the configuration described above, the pixel addresses (to be accessed) of the image memory are accessed by the memory address control apparatus in place of the host computer. The program execution by the host computer is simple, and the number of program steps is decreased. According to the present invention, the load of the host computer is greatly decreased, and the image memory can be accessed at a high speed in response to the address signals generated by special hardware of the memory address control apparatus. This is because the data of the object pixel of the image data subjected to processing with respect to the image memory is entered from the host computer, the special hardware in place of the host computer calculates the address signals requied for the image memory access, and the image memory is accessed in accordance with the calculated address signals. Therefore, the host computer need not perform a complicated address calculation. In addition, the address calculation can be performed by the special hardware at a high speed, thereby reducing the required access times of the image memory.

This invention can be more fully understood from the following detailed description when taken in conjunction with the accompanying drawings, in which:

Fig. 1 is a block diagram schematically showing an image processing system having a memory address control apparatus according to an embodiment of the present invention;

Fig. 2 is a block diagram schematically showing an address generator 5a in the apparatus of Fig. 1;

Fig. 3 is a representation for explaining the operation of the address generator 5a of Fig. 2;

Fig. 4A is a table for explaining the relationships between the input and output signals with respect to a control logic circuit 35 shown in Fig. 2;

Fig. 4B is a circuit diagram of the control logic circuit 35 shown in Fig. 2;

Fig. 5A is a table for explaining the relationship between the input and output signals with respect to a control logic circuit 40 (41) shown in Fig. 2;

Fig. 5B is a circuit diagram showing the control logic circuit 40 (41) shown in Fig. 2;

Fig. 6 is a block diagram schematically showing an address generator 5b of Fig. 1;

Fig. 7 is a representation for explaining the operation of the address generator 5b shown in Fig. 1;

Fig. 8 is a block diagram schematically showing an address generator 5c of Fig. 1;

Fig. 9 is a representation showing direction codes supplied to the address generator 5c of Fig. 8;

Fig. 10A is a table for explaining the relationship between the input and output signals with respect to a decoder 74 shown in Fig. 8;

Fig. 10B is a block diagram of the decoder 74 shown in Fig. 8;

Fig. 11 is a block diagram schematically showing an arrangement of an address generator 5d of Fig. 1; and

Fig. 12 is a block diagram schematically showing another arrangement of the address generator 5d of Fig. 1.

A memory address control apparatus according to an embodiment of the present invention will be described with reference to the accompanying drawings.

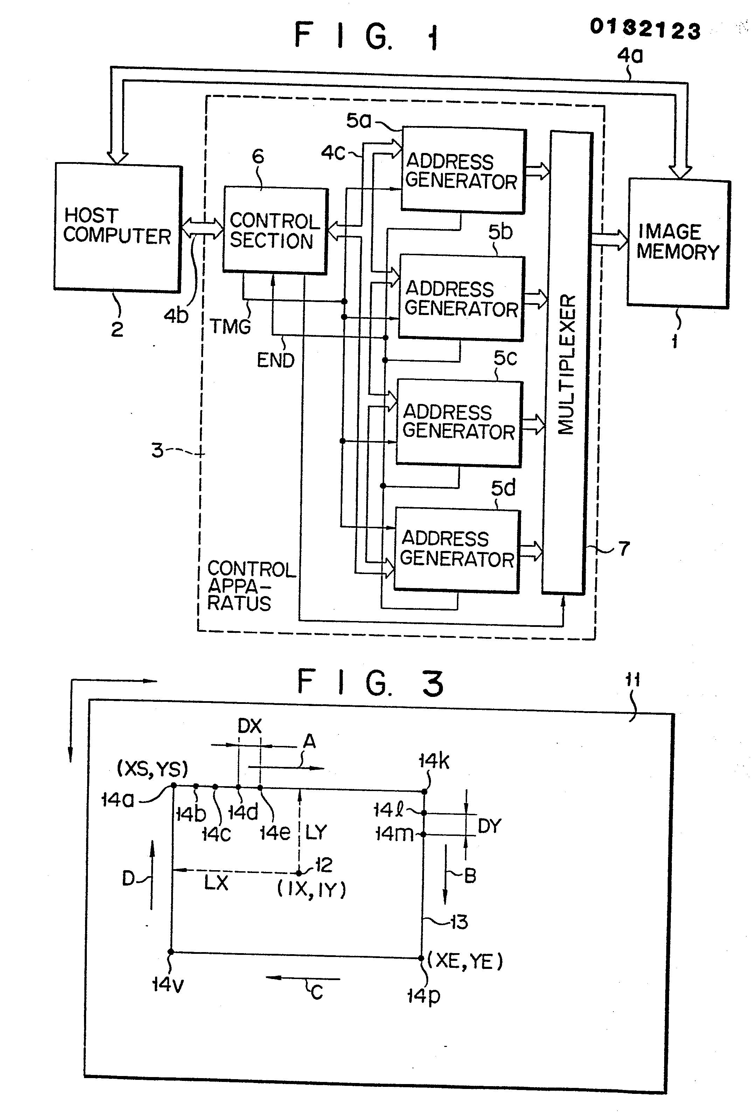

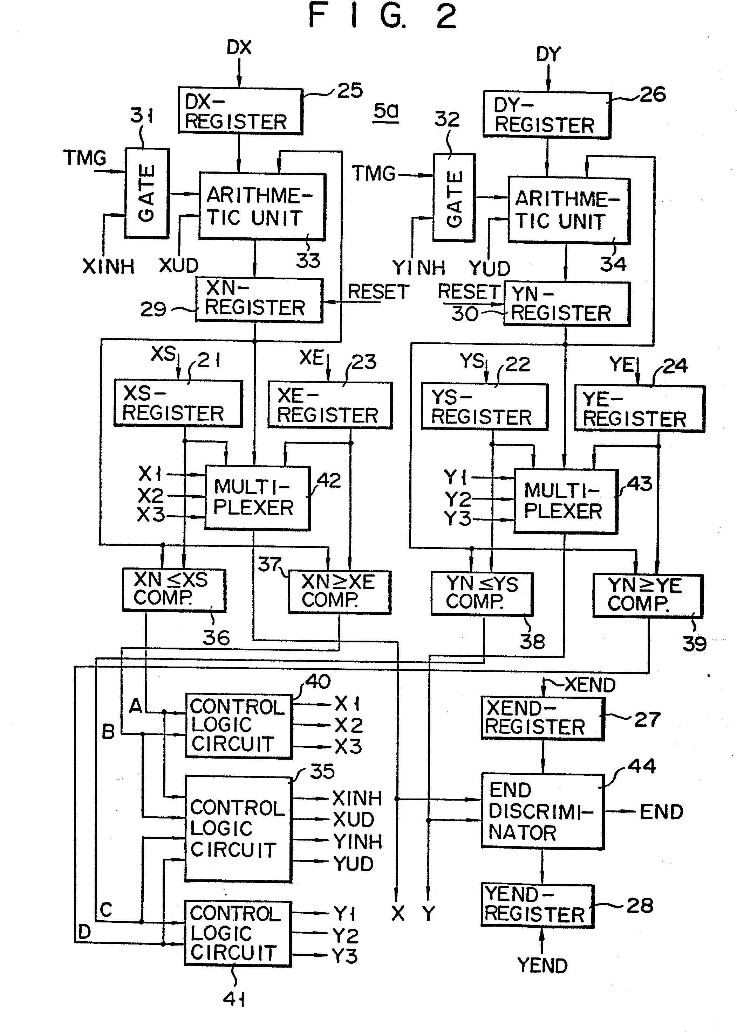

Fig. 1 schematically shows the overall configuration of an image processing system having a memory address control apparatus according to an embodiment of the present invention. The image processing system comprises an image memory 1 for storing image data, a host computer 2 for exchanging the image data with the image memory 1, and a memory address control apparatus 3 connected to the image memory 1 and the host computer 2. The memory address control apparatus 3 comprises LSI hardware. The image memory 1 is connected to the host computer 2 through a data bus 4a. The image data is exchanged between the image memory 1 and the host computer 2 through the data bus 4a. The host computer 2 supplies various control data to the memory address control apparatus 3 through a control bus 4b. The memory address control apparatus 3 accesses the image memory 1 in accordance with these control data.

In this embodiment, the host computer 2 fetches the image data subjected to image analysis which is stored in the image memory 1 and analyzes it.

The memory address control apparatus 3 receives the address data of an object pixel which is included in the image data subjected to image analysis from the host computer 2, calculates the addresses of the necessary pixels for image analysis in accordance with the address data, and accesses the image date of the image memory 1 corresponding to the necessary pixels according to the calculated addresses.

In the image processing system shown in Fig. 1, the memory address control apparatus 3 comprises four address generators 5a, 5b, 5c and 5d which have different types of hardware. The address generators 5a, 5b, 5c and 5d are formed together with a control section 6 on a single IC substrate. The control section 6 in the memory address control apparatus 3 receives the address data of the object pixel and control data including a mode data from the host computer 2. The control section 6 first supplies an enable signal to one of the address generators 5a to 5d and selectively supplies address data of the object pixel sent from the host computer 2 to the selected address generator in accordance with the mode data. Thus, the control section 6 selectively drives the address generators 5a, 5b, 5c and 5d and a multiplexer 7 in accordance with the control data from the host computer 2. Selective driving is performed such that the control section 6 supplies the enable signal as a select signal to select the address generators 5a, 5b, 5c and 5d and timing signals for defining the operations thereof.

The address data calculated by one of the selected address generators 5a, 5b, 5c and 5d is supplied to the image memory 1 through the multiplexer 7.

The pixel data corresponding to the supplied address is read out from the image memory 1 and is supplied to the host computer 2 through the data bus 4a.

The address calculation and the access of the image memory 1 in response to the calculated address data are repeated by the memory address control apparatus 3 until the predetermined final condition is satisfied. When the final condition is detected by the selected one of the address generators 5a, 5b, 5c and 5d, the selected address generator supplies end signals to the control section 6. The control section 6 then stops generating the timing signals TMG. At the same time, the control section 6 supplies the end signals END to the host computer 2.

When the host computer 2 detects that the data need not be exchanged with the image memory 1 before the host computer 2 receives the end signals END, it can supply another control signal to the memory address control apparatus 3. The memory address control apparatus 3 performs the prescribed operation in accordance with this control signal.

The data exchange between the image memory 1 and the host computer 2 is basically performed in each pixel. However, a proper buffer memory may be used to transfer as unit data of a predetermined number of pixels or image data. In this case, the control section 6 generates the corresponding number of timing signals by using an internal counter or the like.

Fig. 2 is a block diagram schematically showing the address generator 5a of Fig. 1. The address generator 5a sequentially generates addresses of pixels 14a, 14b, ... positioned along a rectangle image 13 as showin in Fig. 3 including an object pixel 12 therein when data of the pixel 12 which is included in an image 11 is subjected to image analysis and stored in the image memory 1. In this case an address data of the object pixel 12 is designated by the host computer 2.

In order to drive the address generator 5a having the function described above, the control signal sent to the control section 6 from the host computer 2 via the control bus 4b includes mode data or an enable signal for selecting the address generator 5a and initial information required for starting the operation thereof. The initial information comprises address data IX and IY of the object pixel 12, distance data LX and LY between the pixel 12 and the rectangle 13 in X and Y directions, and pitch data DX and DY representing the pitches of the pixels on the rectangle 13 along the X and Y directions. When the address generator 5a receives the initial information, it sequentially generates the addresses of the pixels 14a, 14b, ... at the pitch DX along the upper side of the rectangle 13 from the left to the right thereof in the direction of an arrow A, starting from an upper left pixel 14a. The address generator 5a then generates the address of pixels 14ℓ, 14m, ... at the pitch DY downward in the direction of an arrow B along the right side of the rectangle 13. The address generator 5a then generates the addresses of the pixels 14p to 14v at the pitch DX of the lower side of the rectangle 13 from the right to the left in the direction of an arrow C. Finally, the address generator 5a generates the addresses of the pixels 14v to 14a at the pitch DY upward along the left side of the rectangle 13 in the direction of an arrow D. The image memory 1 is thus accessed in accordance with the address data of the respective pixels 14a ... 14v ... 14a.

When the mode data for specifying the address generator 5a and the initial information therefor are supplied from the host computer 2 to the memory address control apparatus 3 via the control bus 4b, the control section 6 in the memory address control apparatus 3 calculates the initial data required for defining the rectangle 13 in accordance with the initial information. The initial data are upper left point data XS and YS, and lower right point data XE and YE of the rectangle 13 as shown in Fig. 3. These items of initial data are calculated such that $XS = IX - LX$; $YS = IY - LY$; $XE = IX + LX$; and $YE = IY + LY$. The respective items of initial data XS, YS, XE and YE are set in registers 21, 22, 23 and 24 in the address generator 5a, respectively. The pitch data DX and DY among the initial information is set in registers 25 and 26 in the address generator 5a, respectively. The upper left point data on the rectangle 13 is set as end address data XEND and YEND in registers 27 and 28. At the same time, registers 29 and 30 are initialized by reset signals supplied from the control section 6.

Thereafter, when a timing signal TMG for driving the address generator 5a is supplied from the control section 6 to the address generator 5a, it is supplied to arithmetic units 33 and 34 respectively through gates 31 and 32. The gates 31 and 32, and the arithmetic units 33 and 34 are controlled by operation control signals XINH, YINH, XUD and YUD generated by a control logic circuit 35. The control signals XINH and YINH are supplied to the gates 31 and 32, and the supply of the timing signal TMG to the arithmetic units 33 and 34 is inhibited in response to the control signals XINH and YINH.

The control signals XUD and YUD supplied to the arithmetic units 33 and 34 determine if the data DX and DY stored in the registers 25 and 26 are added to or subtracted from present or updated address data XN and YN stored in the registers 29 and 30, respectively. Updated data XN and YN calculated by the arithmetic units 33 and 34 in accordance with the control signals XUD and YUD is stored in the registers 29 and 30, respectively. The following data is set in the registers 29 and 30 in response to the timing signal TMG:

$$XN \leftarrow XN \pm DX$$
$$YN \leftarrow YN \pm DY$$

The X- and Y-direction address data stored in the registers 29 and 30 is supplied to comparators 36 and 37, and to comparators 38 and 39, and is compared with data XS and XE stored in the registers 21 and 23, and data YS and YE stored in the registers 22 and 24, respectively. The comparator 36 generates a signal A of logic "1" if XN $\leq$ XS. Similarly, the comparator 37 generates a signal B of logic "1" if XN $\geq$ XE. Thus, when X direction address data has a value between the data of XS and XE, the signal A is "0" and the signal B is "0". The comparator 38 generates a signal C of logic "1" if YN $\leq$ YS. The comparator 39 generates a signal D of logic "1" if YN $\geq$ YE. Thus, when Y direction address data has a value between the data of YE and YS, the signal C = "0", and the signal D "0". The control logic circuit 35 generates the operation control signals XINH, YINH, XUD and YUD in accordance with the respective signals A, B, C and D.

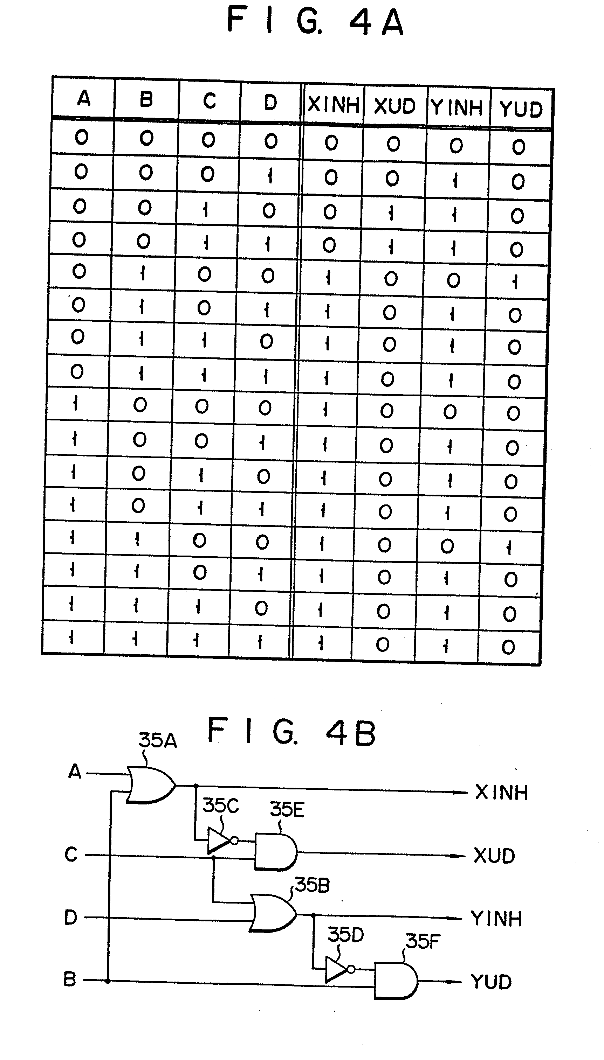

Fig. 4A shows the relationship between the input and output signals with respect to the control logic circuit 35. The control logic circuit 35 may be constituted with a plurality of logic gate elements, as shown in Fig. 4B. In Fig. 4B, reference numerals 35A and 35B dnote OR gates, 35C and 35D inverters, and 35E and 35F AND gates. Since the logic operations thereof are self-explanatory, the description of the operation thereof is omitted here.

The signals A and B, and the signals C and D are supplied to other control logic circuits 40 and 41, respectively. The control logic circuit 40 receives the signals A and B and generates select signals X1, X2 and X3 for controlling the selecting operation of a multiplexer 42. Similarly, the control logic circuit 41 receives the signals C and D, and generates select signals Y1, Y2 and Y3 for controlling the selecting operation of a multiplexer 43.

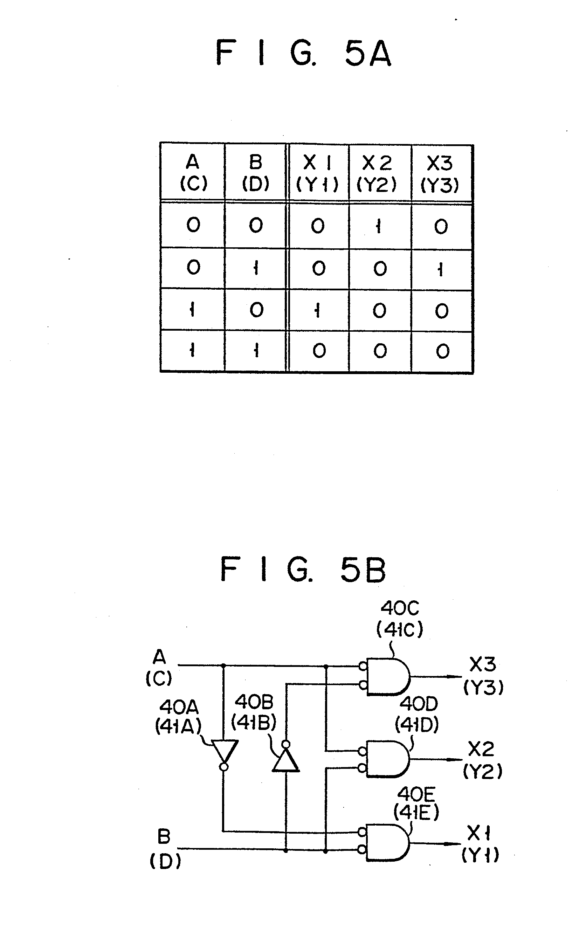

Fig. 5A shows the relationship between the input and output signals with respect to the control logic circuit 40 (41). The control logic circuit 40 (41) comprises a plurality of logic gate elements, as shown in Fig. 5B.  In the figure, reference numerals 40A (41A) and 40B (41B) denote inverters, and 40C (41C), 40D (41D) and 40E (41E) denote NAND gates.  The description of the operation thereof is omitted here.

When the multiplexer 42 receives the select signal X1, it selects the data XS set in the register 21. When the multiplexer 42 receives the select signal X2, it selects the data XN set in the register 29.  When the multiplexer 42 receives the select signal X3, it selects the data XE set in the register 23.  Similarly, when the multiplexer 43 receives the select signal Y1, it selects the data YS set in the register 22.  When the multiplexer 43 receives the select signal Y2, it selects the data YN set in the register 30.  When the multiplexer 43 receives the select signal Y3, it selects the data YE set in the register 24.  The data selected through the multiplexers 42 and 43 serve as address data X and Y for accessing the image memory 1.

The address data X and Y obtained as described above are supplied to an end discriminator 44.  The end discriminator 44 comprises a coincidence detector constituted with, for example, first and second coincidence circuits and an AND gate.  In the end discriminator 44 the coincidence between the data X and Y and the data XEND and YEND set in the registers 27 and 28 is first detected, respectively to have two detection signals.  The logical AND of the two detection signals is then detected.  When a coincidence is established, the end discriminator 44 generates the end signal END from the AND gate.

The address generator 5a having the arrangement described above sequentially generates the addresses of the pixels 14a, 14b, ... along the rectangle 13 which contains the object pixel 12, as shown in Fig. 3.

Every time the timing signal TMG is supplied to the address generator 5a, the data XN and YN set in the registers 29 and 30 are updated in accordance with the pitch data DX and DY, so that the addresses of the pixels 14a, 14b, ... along the rectangle 13 can be sequentially generated. When the end address data is generated, the address generation is stopped.

When the end address data XEND and YEND set in the registers 27 and 28 is arbitrarily selected to represent any pixel along the rectangle 13, address generation can be interrupted before the addresses of all the pixels 14a, ... 14a along the rectangle 13 are generated. In this case, the end address data XEND and YEND are included in the initial information supplied from the host computer 2.

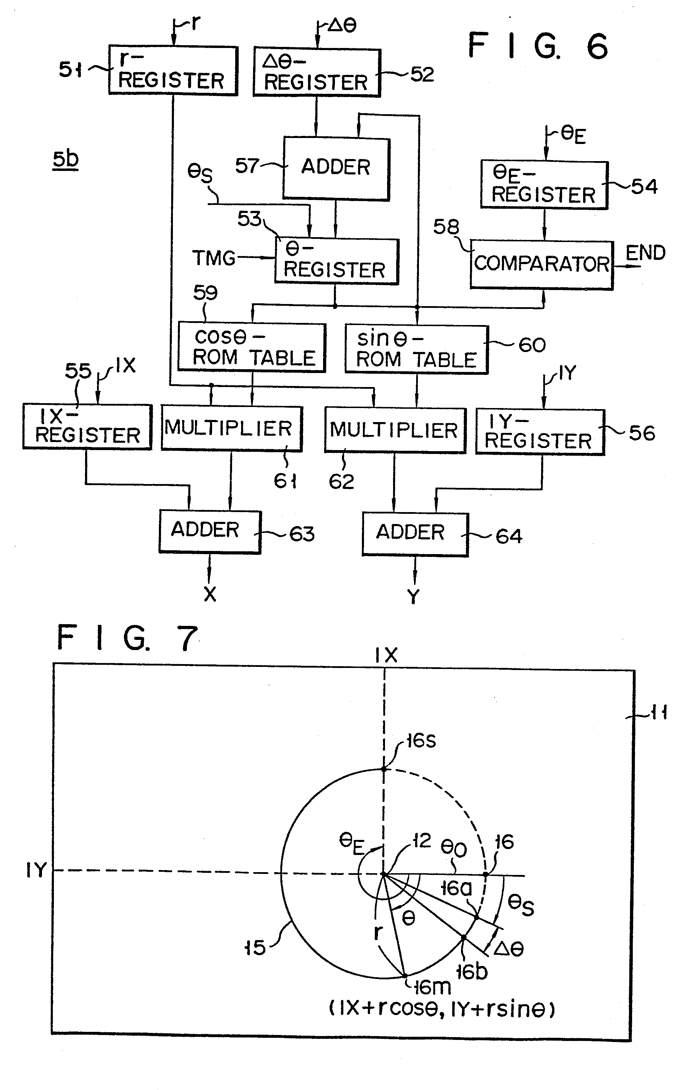

Fig. 6 is a block diagram schematically showing the address generator 5b. As shown in Fig. 7, the address generator 5b sequentially generates addresses of pixels 16a, 16b, ... along a circle 15 including the object pixel 12 whose data is included in the image data 11 stored in the image memory 1. This circle 15 has a radius r and has the object pixel at its center. The pixels along the circle 15 are defined as pixels 16a, 16b, ..., 16s extracted at an angular interval $\Delta\theta$ falling within the range of the start angle $\theta S$ and the end angle $\theta E$.

When the start and end angles $\theta S$ and $\theta E$ are not defined, the address generator 5b sequentially generates the address data of all the pixels along the circle 15.

When the address generator 5b for generating the address data along the circle 15 is specified in accordance with the mode data supplied from the host computer 2, the control section 6 generates the initial data r, $\Delta\theta$, $\theta S$ and $\theta E$ required for address calculation in accordance with the address control data from the host computer 2 which follows the mode data. When the host computer 2 does not specify the information for the end angle $\theta E$ as one of the initial data, the end angle $\theta E$ is given to be, for example $2\pi$.

The respective items of initial data r, $\Delta\theta$, $\theta S$

and $\theta E$ are set in registers 51, 52, 53 and 54 in the address generator 5b from the control section 6, as shown in Fig. 6, respectively. The address data IX and IY of the object pixel 12 is set in registers 55 and 56, respectively. An adder 57 adds the angular interval data $\Delta\theta$ set in the register 52 to the start angle data $\theta S$. Thus, the angle data $\theta$ calculated by the adder 57 is given as follows:

$$\theta = \theta S + n\Delta\theta \quad (n = 1, 2, 3, \ldots)$$

The angle data $\theta$ from the adder 57 is sequentially stored as control parameter data in the register 53 in response to the respective timing signals TMG.

The sequentially updated angle data $\theta$ stored in the register 53 is supplied to a comparator 58 and to ROM tables 59 and 60. The ROM tables 59 and 60 store cosine components and sine components of the angle data $\theta$ in table formats, respectively. The unit length component data $\cos\theta$ and $\sin\theta$ along the X and Y directions are produced from the ROM tables 59 and 60. The unit data representing $\cos\theta$ and $\sin\theta$ is supplied to multipliers 61 and 62 and is multiplied with the radius data r of the circle 15. The multipliers 61 and 62 generate length data $r\cos\theta$ and $r\sin\theta$ along the X and Y directions, respectively. The length data $r\cos\theta$ and $r\sin\theta$ are supplied to adders 63 and 64 and is added to the address data IX and IY of the object pixel 12 which is stored in the registers 55 and 56, respectively. The adders 63 and 64 generate sum data $(IX + r\cos\theta)$ and $(IY + r\sin\theta)$ as access address data X and Y for the image memory 1. The data $(IX + r\cos\theta)$ and $(IY + r\sin\theta)$ generally include fractional part data, while the addresses of the image memory 1 are given as integral part data. Therefore, the data $(IX + r\cos\theta)$ and $(IY + r\sin\theta)$ are given as integral part data by rounding off the fractional part data. The resultant data is generated as the address data X and Y. In this manner, the address generator 5b sequentially generates the address data of the pixels 16a, 16b, ..., 16s along the circle 15 in units of angular intervals Δθ when the angle data θ is used as the parameter.

The comparator 58 compares the angle data θ with the end angle data θE set in the register 54. When a coincidence between these two items of data is established, the comparator 58 generates the end signal END. The address data corresponding to the angle data θ is sequentially generated until the end signal END is generated. With the address generator 5b, as shown in Fig. 7, the addresses of the pixels 16a, 16b, ... along the circle 15 having the object pixel 12 at its center are generated.

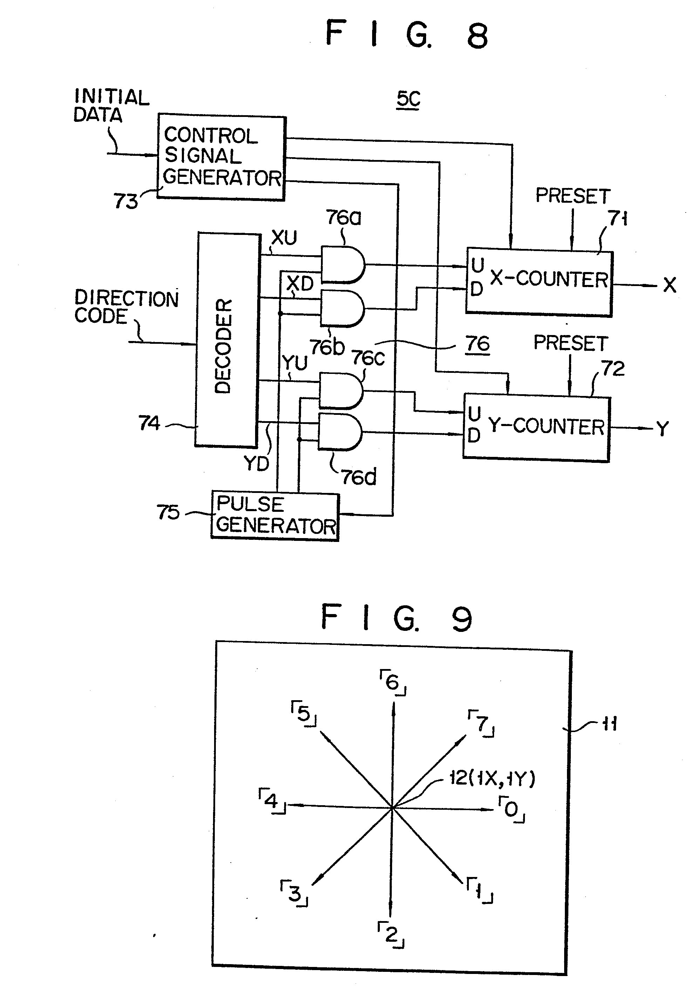

Fig. 8 is a block diagram schematically showing the address generator 5c. The address generator 5c comprises presettable up/down counters 71 and 72, a control signal generator 73, a decoder 74, a pulse generator 75 and a gate network 76 including AND gates 76a to 76d. When the generator 5c is enabled by the mode data from the host computer 2 the address data of the object pixel 12 is supplied as the initial data from the host computer 2 to the control signal generator 73 through the control section 6. The control signal generator 73 is driven in response to the enable signal. When the address data of the pixel 12 is supplied as the initial data from the host computer 2 to the control signal generator 73, these items of initial data are preset in the counters 71 and 72. The data preset in the counters 71 and 72 is outputted as address data X and Y for accessing the image memory 1 without modification. When a direction code follows the initial data from the host computer 2, the direction code is supplied to the decoder 74. The direction code indicates the direction toward which the next pixel to be accessed is located. The direction code indicates, in this case, any one of eight directions (i.e., right, lower right, lower, lower left, left, upper left, upper, and upper right directions) by means of codes "0" to "7".

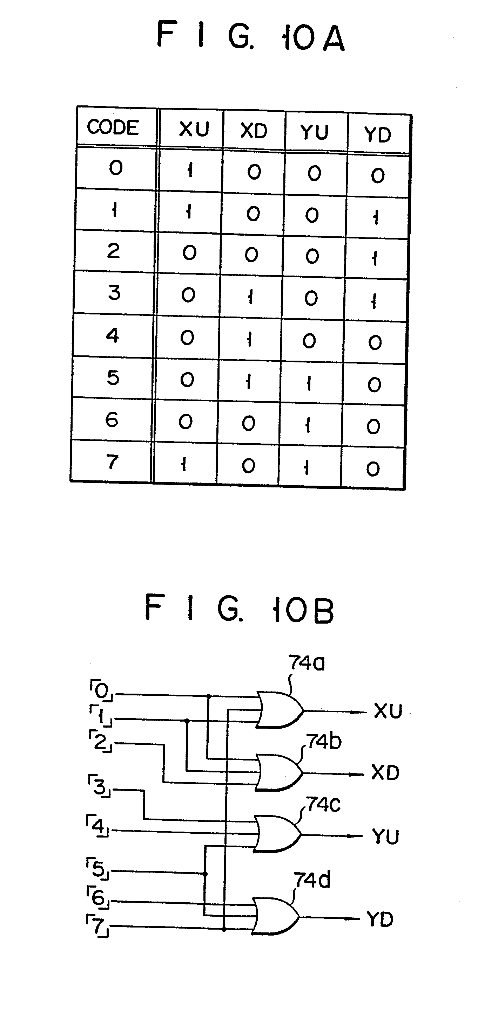

Fig. 10A shows the logical relationship between the input and output signals with respect to the decoder 74 receiving the direction code "0" to "7". Fig. 10B is a block diagram of the decoder 74 constituted with, for example, four OR gates 74a to 74d. The AND gates 76a to 76d in the gate network 76 are selectively enabled in response to the output data XU, XD, YU and YD from the decoder 74. The pulse signal generated by the pulse generator 75 passes through the enabled and is supplied to the up or down terminal U, D of the up/down counter 71 or 72. The preset data in the counter 71 or 72 is incremented or decremented in response to the pulse signal applied to the up or down terminal thereof. For example, when the direction code represents the "right" direction, the direction code is "0" as shown in Fig. 9 and a signal XU is generated by the decoder 74, as shown in Fig. 10A. A pulse signal is supplied to the U terminal of the counter 71 through the enabled AND gate 76a. In this case, the counter 72 does not receive the signal. As a result, the data set in the counter 71 is incremented by one. This incremented data and the data in the counter 72 are used as updated address data X and Y for the image memory 1. This address updating is performed so as to selectively increment or decrement the content of the counter 71 or 72 by one every time the direction code is supplied from the host computer 2. Therefore, the address data for accessing the image memory 1 is updated by one pixel interval along the direction specified by the direction code.

Every time the direction code is supplied from the host computer 2 to the address generator 5c, the address generator 5c basically generates one new address data. The direction code and address updating amount data may be used as the initial data to be supplied from the host computer 2. In this case, the address updating amount data is supplied to the pulse generator 75. The pulse generator 75 generates pulses whose number N corresponds to the address updating amount so as to increment or decrement the data in the counter 71 or 72 by N. The resultant data may be generated as address data for accessing the ±Nth pixel.

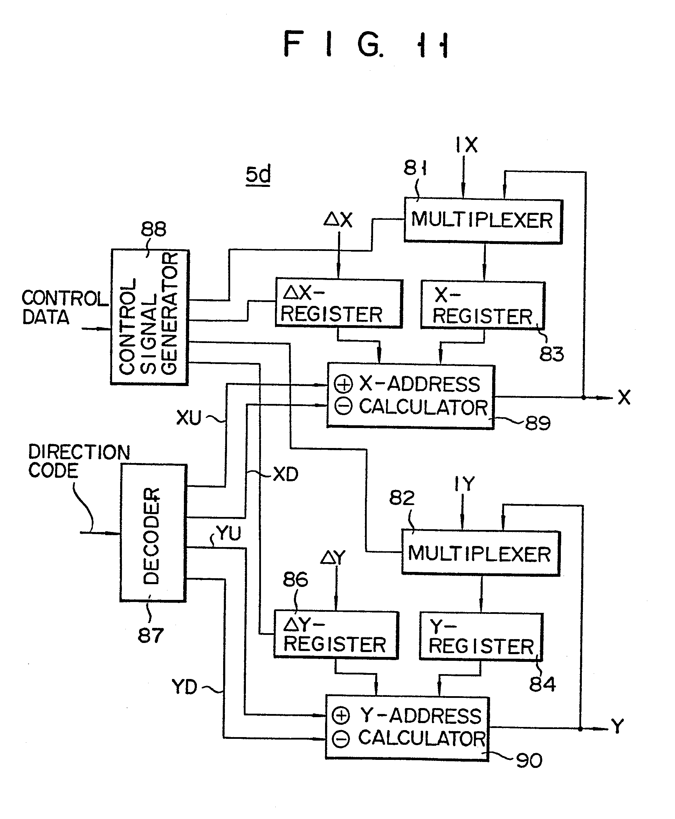

Fig. 11 is a block diagram schematically showing the address generator 5d. The address generator 5d is selected in accordance with the corresponding mode data or enable data supplied from the host computer 2. The address generator 5d sequentially supplies the calculated address data X and Y to the image memory 1 obtained in accordance with the initial data comprising the address data IX, IY, and data $\Delta X$, $\Delta Y$ and the direction code supplied from the image memory 1. The initial data $\Delta X$ and $\Delta Y$ is the X- and Y-direction relative address differences between the object pixel 12 and the next address to be accessed.

The initial address data IX and IY of the pixel 12 is set in registers 83 and 84 through multiplexers 81 and 82, respectively. The relative address difference data $\Delta X$ and $\Delta Y$ is set in registers 85 and 86, respectively. The direction code "0" to "7" is decoded by a decoder 87. A control signal generator 88 generates a timing signal for controlling the data setting of the registers 83, 84, 85 and 86 in accordance with the control data from the host computer 2 and the calculation operations of address calculators 89 and 90. The address calculators 89 and 90 perform addition or subtraction of the data set in the registers 83, 84, 85 and 86 in accordance with output signals XU, XD, YU and YD from the decoder 87. The decoder 87 has the same arrangement as the decoder 74 in the address generator 5c. The output signals XU and XD from the decoder 87 are used to specify addition and subtraction in the address calculator 89, respectively. The output signals YU and YD from the decoder 87 are used to specify addition and subtraction in the address calculator 90, respectively.

In accordance with the signals XU, XD, YU and YD, the address calculators 89 and 90 perform the following calculations, respectively:

$$X = IX \pm \Delta X$$
$$Y = IY \pm \Delta Y$$

Thus, the address data X and Y is sequentially generated to access the image memory 1.

The address data X and Y is supplied to the image memory 1. At the same time, the address data X and Y is supplied as a current address data of the next pixel to the registers 83 and 84 through the multiplexers 81 and 82, respectively. Thereafter, every time the direction code is supplied to the decoder 87 from the host computer 2, the relative unit address difference data $\Delta X$ and $\Delta Y$ is added to or subtracted from the current address data stored in the registers 83 and 84, respectively, in accordance with the direction code, thereby generating the updated address data for accessing the image memory 1. It should be noted that the relative unit address difference data $\Delta X$ and $\Delta Y$ can be arbitrarily modified when the direction code is supplied to the generator 5d.

The address generator 5d sequentially calculates the address data for accessing the image memory 1 in accordance with the initial data $\Delta X$ and $\Delta Y$, and the direction code supplied from the host computer 2. Further, the relative address difference data $\Delta X$ and $\Delta Y$ may be prestored in a memory provided in the address generator 5d. In this case, the host computer 2 supplies the initial data (direction code and address updating amount data) to the address generator 5d.

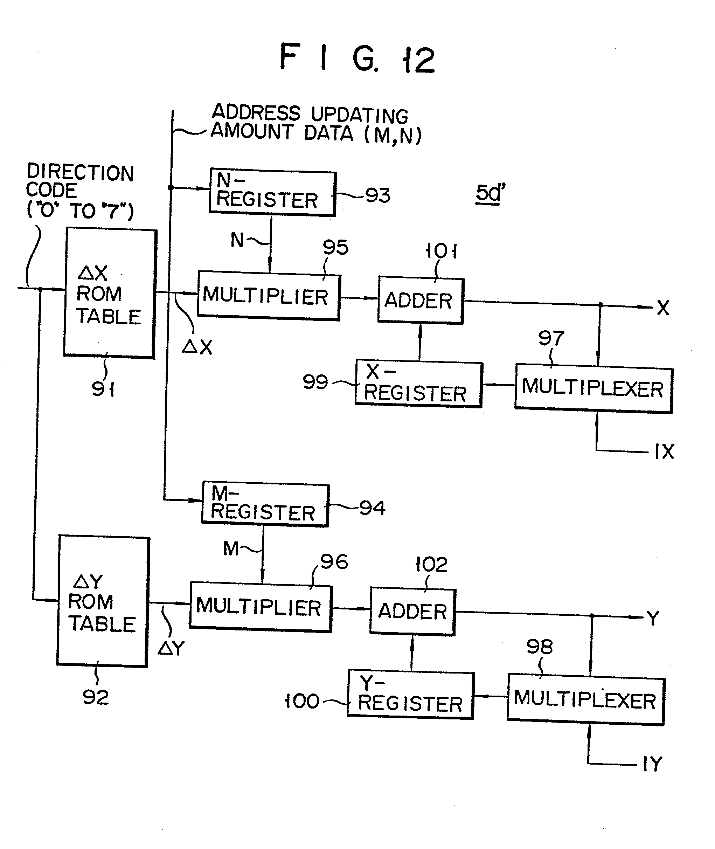

Fig. 12 is a block diagram showing a modified generator 5d' of the address generator 5d. $\Delta X$ and $\Delta Y$ ROM tables 91 and 92 store the relative unit address

difference data $\Delta X$ and $\Delta Y$ so as to correspond to the direction code supplied from the host computer 2. The X- and Y-direction address updating amount data N, M from the host computer 2 is set in registers 93 and 94, respectively. The data $\Delta X$ read out from the $\Delta X$ ROM table 91 in accordance with the direction code "0" to "7" is multiplied by a multiplier 95 with data N set in the register 93. An output ($\Delta X \times N$) from the multiplier 95 becomes the X relative address difference data between the currently accessed address of the image memory 1 and the next address thereof. The data $\Delta Y$ read out from the $\Delta Y$ ROM table 92 in accordance with the direction code is multiplied by a multiplier 96 with data M set in the register 94. An output ($\Delta Y \times M$) from the multiplier 96 becomes the Y relative address difference data. It should be noted that the data N and M set in the registers 93 and 94 are set to be "1" when address updating is performed by only a unit amount data $\Delta X$, $\Delta Y$.

The initial address data IX and IY of the object pixel 12 are set in X and Y registers 99 and 100 through multiplexers 97 and 98, respectively. Adders 101 and 102 add the initial data IX and IY and the relative address difference data so as to obtain the next address data X and Y for the image memory 1, respectively. The resultant address data is supplied to the image memory 1 for accessing the same. At the same time, these current address data are set in the registers 99 and 100 through the multiplexers 97 and 98 so as to prepare for the next address calculation, respectively.

When the address generator 5d' is arranged as described above, address data updating can be easily performed. In other words, when the direction code and the address updating amount data are supplied from the host computer 2 to the address generator 5d', the necessary arithmetic operations can be effectively performed.

Preferred address generators have the arrangement and modes of operation as described above, respectively. However, the address generators are not limited to this, and various changes and modifications may be made within the scope and spirit of the present invention. For example, the direction code may indicate one of 16 directions. The pixels along a closed curve of any figure having the object pixel therein may be simplified to comprise four or eight pixels surrounding the object pixel. In addition, a memory address control apparatus having only one address generator may be arranged. It is essential to perform address calculation for image analysis by means of special hardware for accessing the image memory 1 in response to the calculated address data. Other modifications may also be implemented without departing from the appended claims.

Claims:

1. A memory address control apparatus (3) connected to an image memory (1) and a host computer (2) for exchanging image data with said image memory (1), which generates pixel address data for said image memory (1) and accesses said image memory (1), characterized in that said memory address control apparatus (3) comprises means (6) which receives the address data of an object pixel included in the image data exchanged between said image memory (1) and said host computer (2), and produces initial data required for address calculation, means (5a, 5b, 5c, 5d) which calculates address data of a next pixel to be accessed from said image memory, and means (42, 43) which accesses said image memory (1).

2. An apparatus according to claim 1, characterized in that said apparatus (3) comprises means (6) which receives the address data of the object pixel in such a manner that the address data of the object pixel supplied from said host computer is stored as the address data of the next object pixel, and produces the initial data as relative address difference data corresponding to a direction code which is supplied as address control data from said host computer and which indicates a direction of the next pixel to be accessed, and means (5a to 5d) which calculates the address data of the next pixel in such a manner that the relative address data is added to or subtracted from the address data stored in said address register.

3. An apparatus according to claim 1, characterized in that said apparatus (3) comprises means (5a to 5d) which receives the address data of the object pixel in such a manner that the address data of the object pixel supplied from said host computer is stored as the address data of the next object pixel, and produces the initial data asrelative address difference data between a currently accessed pixel and the next pixel, the relative address difference data being supplied from said host computer, and calculates the address data of the next pixel in such a manner that the relative address difference data is added to or subtracted from the address data stored in said address register (5a to 5d).

4. An apparatus according to claim 1, characterized in that said apparatus comprises means (6) which receives the address data of the object pixel in an address register (5a to 5d), and means (5a to 5d) which produces the initial address as a parameter data for forming a closed curve including the object pixel in its inside whose address data is stored in said address register and calculates the addresses of the pixels along the closed curve in accordance with the parameter data.

5. An apparatus according to claim 1, characterized in that the closed curve comprises a circle or a rectangle.

# F I G. 1

0132123

# F I G. 3

FIG. 2

# F I G. 4A

| A | B | C | D | XINH | XUD | YINH | YUD |
|---|---|---|---|------|-----|------|-----|
| 0 | 0 | 0 | 0 | 0 | 0 | 0 | 0 |
| 0 | 0 | 0 | 1 | 0 | 0 | 1 | 0 |
| 0 | 0 | 1 | 0 | 0 | 1 | 1 | 0 |
| 0 | 0 | 1 | 1 | 0 | 1 | 1 | 0 |
| 0 | 1 | 0 | 0 | 1 | 0 | 0 | 1 |
| 0 | 1 | 0 | 1 | 1 | 0 | 1 | 0 |
| 0 | 1 | 1 | 0 | 1 | 0 | 1 | 0 |
| 0 | 1 | 1 | 1 | 1 | 0 | 1 | 0 |
| 1 | 0 | 0 | 0 | 1 | 0 | 0 | 0 |
| 1 | 0 | 0 | 1 | 1 | 0 | 1 | 0 |
| 1 | 0 | 1 | 0 | 1 | 0 | 1 | 0 |
| 1 | 0 | 1 | 1 | 1 | 0 | 1 | 0 |
| 1 | 1 | 0 | 0 | 1 | 0 | 0 | 1 |
| 1 | 1 | 0 | 1 | 1 | 0 | 1 | 0 |
| 1 | 1 | 1 | 0 | 1 | 0 | 1 | 0 |
| 1 | 1 | 1 | 1 | 1 | 0 | 1 | 0 |

# F I G. 4B

# F I G. 5A

| A<br>(C) | B<br>(D) | X1<br>(Y1) | X2<br>(Y2) | X3<br>(Y3) |
|---|---|---|---|---|
| 0 | 0 | 0 | 1 | 0 |
| 0 | 1 | 0 | 0 | 1 |
| 1 | 0 | 1 | 0 | 0 |
| 1 | 1 | 0 | 0 | 0 |

# F I G. 5B

## F I G. 6

5b

51 — r-REGISTER ← r

52 — Δθ-REGISTER ← Δθ

57 — ADDER

53 — θ-REGISTER ← TMG, θ_S

54 — θ_E-REGISTER ← θ_E

58 — COMPARATOR → END

59 — cosθ-ROM TABLE

60 — sinθ-ROM TABLE

55 — IX-REGISTER ← IX

56 — IY-REGISTER ← IY

61 — MULTIPLIER

62 — MULTIPLIER

63 — ADDER → X

64 — ADDER → Y

## F I G. 7

IX

16S

11

θ_E — 12 θ_O — 16

IY

16a

θ_S

r  θ

15

Δθ

16b

16m

(IX+rcosθ, IY+rsinθ)

0182123

# F I G. 8

# F I G. 9

# F I G. 10A

| CODE | XU | XD | YU | YD |
|------|-----|-----|-----|-----|
| 0 | 1 | 0 | 0 | 0 |
| 1 | 1 | 0 | 0 | 1 |
| 2 | 0 | 0 | 0 | 1 |
| 3 | 0 | 1 | 0 | 1 |
| 4 | 0 | 1 | 0 | 0 |
| 5 | 0 | 1 | 1 | 0 |
| 6 | 0 | 0 | 1 | 0 |
| 7 | 1 | 0 | 1 | 0 |

# F I G. 10B

# F I G. 11

# F I G. 12

ADDRESS UPDATING
AMOUNT DATA (M,N)

DIRECTION
CODE
("0" TO "7")

$\underline{5d'}$

N−
REGISTER —— 93

N

$\triangle$X
ROM
TABLE

91

$\triangle$X

MULTIPLIER  95

ADDER  101

X

X−
REGISTER

99

MULTIPLEXER  97

IX

M−
REGISTER —— 94

M

$\triangle$Y
ROM
TABLE

92

$\triangle$Y

MULTIPLIER  96

ADDER  102

Y

Y−
REGISTER

100

MULTIPLEXER  98

IY